# EUROPÄISCHE PATENTSCHRIFT

(11) **EP 1 721 085 B1**
(45) Veröffentlichungstag und Bekanntmachung des Hinweises auf die Patenterteilung: **16.04.2008**
(21) Anmeldenummer: 05743547.1
(22) Anmeldetag: 21.02.2005
(51) Int. Cl.: F16D 55/00, F16D 55/22

(54) **SCHEIBENBREMSE**
DISK BRAKE
FREIN A DISQUE

(30) Priorität: 01.03.2004 DE 102004009123
(43) Veröffentlichungstag der Anmeldung: 15.11.2006
(73) Patentinhaber: Wabco Radbremsen GmbH, 68229 Mannheim (DE)
(72) Erfinder: KLOOS, Eugen, 64625 Bensheim (DE); BEYER, Frank, 68239 Mannheim (DE)
(74) Vertreter: Leinweber & Zimmermann
(86) Internationale Anmeldenummer: PCT/EP2005/001791
(87) Internationale Veröffentlichungsnummer: WO 2005/083289

(56) Entgegenhaltungen:
- EP-A- 0 489 452
- US-A- 4 632 227

## Beschreibung

Die Erfindung betrifft eine Scheibenbremse mit
einer Bremsscheibe mit einer bevorzugten Laufrichtung,
einer ersten Bremsbacke mit einem ersten Schwerpunkt auf einer ersten Seite der Bremsscheibe,
einer zweiten Bremsbacke mit einem zweiten Schwerpunkt auf einer zweiten Seite der Bremsscheibe,
einem Sattel zum Übertragen von mit der zweiten Bremsbacke erzeugten Bremskräften auf die erste Seite der Bremsscheibe, mit einem ersten Sattelschenkel auf der ersten Seite der Bremsscheibe und einem zweiten Sattelschenkel auf der zweiten Seite der Bremsscheibe, und
einer eine senkrecht auf der Bremsscheibe stehende Mittelachse aufweisenden Zuspanneinrichtung, die dazu ausgelegt ist, die erste Bremsbacke gegen die Bremsscheibe zu drängen, wobei
der zweite Schwerpunkt sowohl im Ruhezustand als auch im Betätigungszustand der Bremse gegenüber dem ersten Schwerpunkt um eine erste vorbestimmte Strecke in Richtung auf eine der bevorzugten Drehrichtung der Bremsscheibe entsprechende Bremsscheibenauslaufseite versetzt ist.

Abgesehen von dem oben beschriebenen Schwerpunktversatz ist eine solche Scheibenbremse bekannt aus der US 5,022,500.

Generell werden Scheibenbremsen nach deren Aufbau und Wirkungsweise hinsichtlich der Anordnung der Zuspanneinrichtung im Bremssattel unterschieden. Beispiele zeigen die Figuren 1 bis 4. Im einzelnen zeigen
- Figur 1: eine schematische Schnittansicht einer Gleitsattelscheibenbremse mit einseitiger Zuspannung nach dem Reaktionskraftprinzip,
- Figur 2: eine schematische Schnittansicht einer Festsattelscheibenbremse mit einseitiger Zuspannung nach dem Reaktionskraftprinzip mit schwimmender Bremsscheibe,
- Figur 3: eine schematische Schnittansicht einer Festsattelscheibenbremse mit beidseitiger Zuspanneinrichtung und fester Bremsscheibe und
- Figur 4: eine schematische Draufsicht im Teilschnitt auf eine Scheibenbremse.

Wenn nachfolgend die Problematik anhand einer Gleitsattelscheibenbremse beschrieben wird, so gelten alle Ausführungen - im übertragenen Sinne - auch für Sattelscheibenbremsen der Bauart Pendelsattel oder Festsattel mit einseitiger oder beidseitiger Zuspannung, wenn am freien - also nicht abgestützten - Sattelschenkel eine Bremsbacke direkt gehalten, geführt und/oder abgestützt ist. Der freie Schenkel ist derjenige Schenkel, der die Bremsumfangskräfte auf dieser Seite aufnimmt und über das die Bremsscheibe übergreifende Brückenteil auf die andere Sattelseite überträgt, auf der der dortige Schenkel des Bremssattels mit einem Festteil verbunden ist. D.h., die Erfindung beschränkt sich nicht auf Gleitsattelscheibenbremsen.

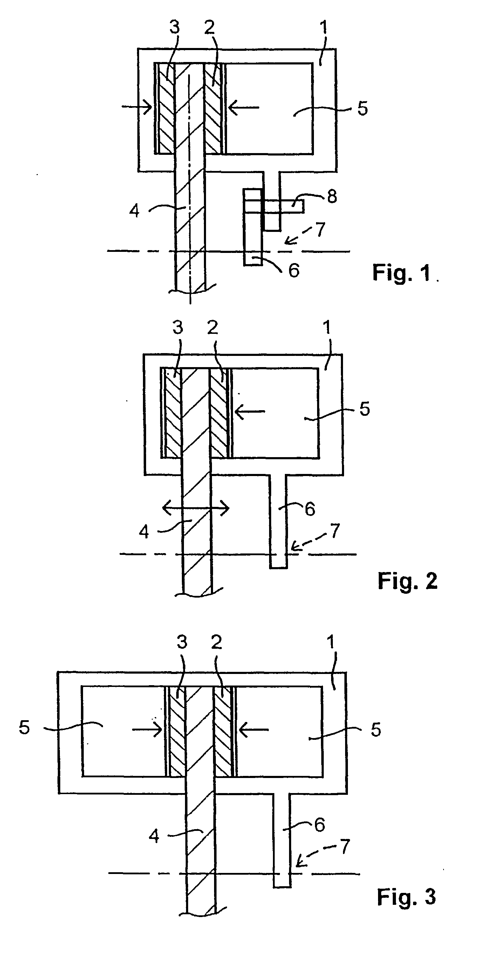

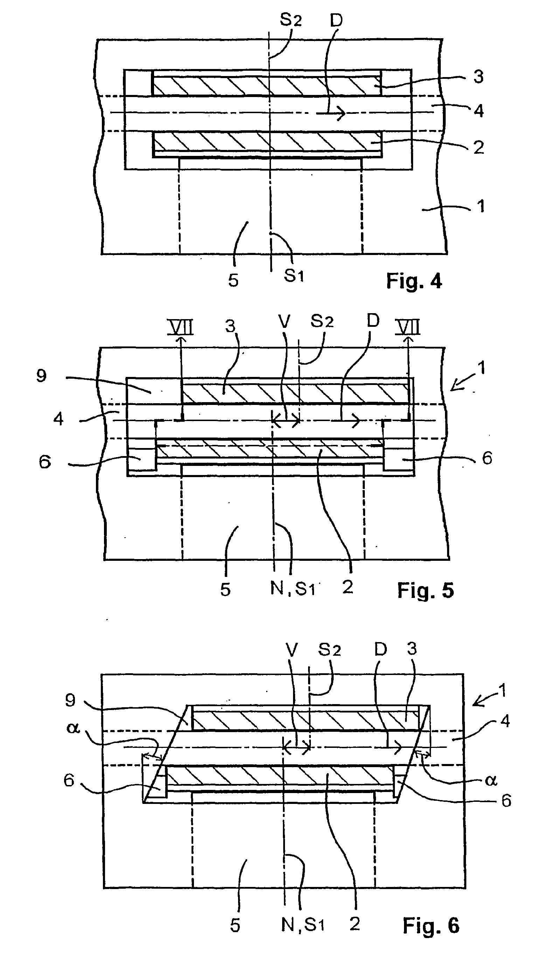

Nach dem in den Figuren 1 bis 4 schematisch dargestellten Stand der Technik weist die Scheibenbremse einen Bremssattel 1 auf, der mit seinen beiden Sattelschenkeln eine Bremsscheibe 4 umgreift und der mit mindestens einer auf einer Seite der Bremsscheibe angeordneten Zuspanneinrichtung 5 ausgestattet ist, um beiderseits der Bremsscheibe 4 in den Bremssattelschenkeln abgestützte und geführte Bremsbacken 2, 3 gegen die Bremsscheibe 4 zu drücken. Die Bremsbacken 2, 3 sind so gehalten/geführt, daß sie einander gegenüberliegen und ihre Schwereachsen bzw. Schwerpunkte S1, S2 (Figur 4) bei einer Verschiebung in Richtung der Bremsscheibe aufeinander liegen und senkrecht auf die Bremsscheibenebene treffen.

Dabei ist der Bremssattel 1 auf einer Seite der Bremsscheibe 4 mittels eines Festteils 6 mit einem Fahrzeugteil 7 (nicht gezeigt) verbunden, welches als Achsteil bezeichnet wird. Über das Festteil 6 werden die vom Bremssattel 1 bei einer Bremsbetätigung aufgenommenen Bremsmomente in das Fahrzeugteil 7 (Achsteil) abgeführt. Insbesondere dann, wenn für die sogenannte felgenseitige Bremsbacke 3 kein separates und die Bremsumfangskräfte aufnehmendes Führungs- und Abstützteil wie ein Bremsenträger vorhanden ist, sondern diese Bremsbacke direkt am freien, nicht abgestützten Bremssattelschenkel befestigt ist, neigt der Bremssattel 1 bei einer Bremsbetätigung verstärkt dazu, sich entsprechend der Drehrichtung D der Bremsscheibe 4 in Richtung Bremsscheibenauslaufseite schräg zu stellen.

Als Folge treten neben einem nachteiligen Schrägverschleiß der felgenseitigen Bremsbacke 3 durch ungleichmäßige Belaganpressung auch je nach Sattelbauart der Scheibenbremse extreme Belastungen in den Führungs- bzw. Tragteilen auf. Dies sind bei einem Gleit- oder Pendelsattel die Bolzenführungen 8 bzw. Lagerbolzen, bei einem Festsattel hingegen der Befestigungsflansch. Dementsprechend stabil müssen entweder die Führungs-oder die Trageeinrichtungen für den Bremssattel gegenüber dem Fahrzeugteil ausgelegt sein.

Da insbesondere bei Scheibenbremsen für Nutzfahrzeuge sehr hohe Bremsmomente zum Abbremsen des Fahrzeugs erforderlich sind, ist eine dementsprechend aufwendige Materialdimensionierung erforderlich. Jedoch läßt sich auch damit eine nachteilige Sattelschrägstellung nicht gänzlich vermeiden.

Daher wird bei der Scheibenbremse nach der DE 197 43 538 mit einer direkten Befestigung der Bremsbacke am freien Sattelschenkel (Felgenseite) versucht, einer Schrägstellung des Sattels dadurch entgegenzuwirken, daß bei einem Gleitsattel ein Teil des Bremsenträgers die Bremsscheibe mit seitlichen Führungsarmen übergreift, um als Stütze /Anlage für den Bremssattel zu dienen, wodurch einer Sattelschrägstellung entgegengewirkt werden soll. Jedoch schränkt eine enge Führungstolerierung die Gleitfunktion durch unerwünschte Reibmomente durch die Sattelanlage während des Brems- und Lösevorgangs ein. Ebenso nachteilig wirken sich hohe Biege- und Reibmomente auf/in den Führungslagern des Gleitsattels aus.

Eine weitere Möglichkeit der Problemlösung zeigt die EP-PS 709 592, die ebenfalls die Führung der zuspannseitigen Bremsbacke im Festteil der Bremse und der felgenseitigen Bremsbacke am Sattelschenkel vorsieht und die eine Bremssattelführung mittels Führungsbolzen realisiert.

Bei beiden beschriebenen Lösungen nach dem Stand der Technik liegen die Schwerpunkte der Bremsbacken bezüglich der Bremsscheibe einander gegenüber. Die Bremsbakken liegen somit einander symmetrisch gegenüber.

Die Bremse nach der EP-PS 709 592 wäre zwar allein schon wegen der Verwendung eines annähernd plattenförmigen Bremsenträgers aus Gewichtsgründen auch im Nutzfahrzeugbereich wünschenswert, jedoch bringt dieser Aufbau selbst bei kleinen und im PKW-Bereich verwendeten Scheibenbremsen schon enorme Nachteile mit sich, die sich hauptsächlich in einer Schrägstellung des Bremssattels äußern. Die Folgen davon sind hohe Biegemomente inklusive Reibmomente in den Sattelführungen (Gegenmomente zur Sattelschrägstellung) und eine ungleichmäßige felgenseitige Belaganlage mit einem nachteiligen Tangentialverschleiß.

Um den steigenden Anforderungen des Marktes an einen Gleitsattel oder Festsattel - wie Gewichtseinsparung, kompakte und servicefreundliche Bauweise - gerecht zu werden, jedoch andererseits die Sicherheit der Bremsenfunktion sowie die Stabilität der Bremse nicht zu vernachlässigen, muß unter Berücksichtigung der verwendeten Werkstoffe das Bestreben dahin gehen, geeignete Wege durch eine moderne Bremsenkonstruktion zu beschreiten.

So sieht die am 5. September 2002 hinterlegte deutsche Patentanmeldung 102 41 157 eine Verbesserung der aus der US 5,022,500 bekannten Bremse dahingehend, daß einer Schrägstellung des Bremssattels vorgebeugt wird, vor, daß der zweite Schwerpunkt gegenüber dem ersten Schwerpunkt um eine vorbestimmte Strecke in Richtung auf eine der bevorzugten Drehrichtung der Bremsscheibe entsprechende Bremsscheibenauslaufseite versetzt ist.

Mit anderen Worten wird die Bremse nach der deutschen Patentanmeldung 102 41 157 in vorbestimmter Weise "unsymmetrisch" ausgelegt. Dadurch wird zu dem Drehmoment auf derjenigen Seite des Bremssattels, welche mit dem Festteil der Achse verbunden ist, ein der Strecke des Versatzes der beiden Schwerpunkte entsprechendes Gegenmoment erzeugt. Bei geeigneter Wahl der Versatzstrecke heben sich die beiden Drehmomente auf, sie "neutralisieren" einander. Mithin wird bei entsprechender Wahl der Versatzstrecke eine Sattelschrägstellung vermieden, wodurch insbesondere auf der freien Seite des Bremssattels eine gleichmäßige Belaganlage erreicht wird. Daraus resultiert eine entsprechende Verschleißkompensation. Die Führungsbolzen müssen kein mit erhöhten Reibmomenten verbundenes Gegenmoment erzeugen, sondern nehmen nur noch die Verschiebekraft und das Abstützmoment des Bremssattels auf. Dadurch ist eine verbesserte Gleitlagerung bei einem Verschiebesattel realisiert.

Dabei ist es gleichgültig, ob es sich um ein am Funktionsbeispiel beschriebenes einzelnes Reibelement auf jeder Seite der Bremsscheibe oder um mehrere Einzelbremsbakken/Einzeisegmente auf jeder Seite der Bremsscheibe handelt, weil der Effekt einer Erzeugung eines Gegenmoments durch versetzte Anordnung/en auch mit mehreren Bremsbakken erzielt werden kann.

Dies trifft auch für einen um mindestens einen Lagerbolzen verschwenkbaren Pendelsattel zu, ebenso für eine Festsattelscheibenbremse. Durch die bereits erläuterte Neutralisierung der Drehmomente erfolgt auch keine "Verschränkung" (Schrägstellung) in den Halte- bzw. Befestigungsbereichen des Bremssattels, wodurch auch hier Material- und Gewichtseinsparungen durch einen geringeren Materialeinsatz erzielt werden können.

Aus der GB 1,066,442 ist eine Scheibenbremse bekannt, bei der die Mittelachse der Zuspanneinrichtung mit der Hauptebene der Bremsscheibe einen spitzen Winkel einschließt.

Die JP 09-032870 A zeigt eine Scheibenbremse, bei der die Mittelachse der Zuspanneinrichtung weder durch den ersten Schwerpunkt, noch durch den zweiten Schwerpunkt läuft und bei der die beiden genannten Schwerpunkte zueinander versetzt sind.

Im folgenden ist die Scheibenbremse nach der deutschen Patentanmeldung 102 41 157 näher erläutert. Dabei zeigen
- die Figuren 5 bis 7: schematisch verschiedene Ausführungsbeispiele.

In den Figuren 5 bis 7 werden - soweit vorhanden - die selben Bezugszeichen verwendet wie in den Figuren 1 bis 4.

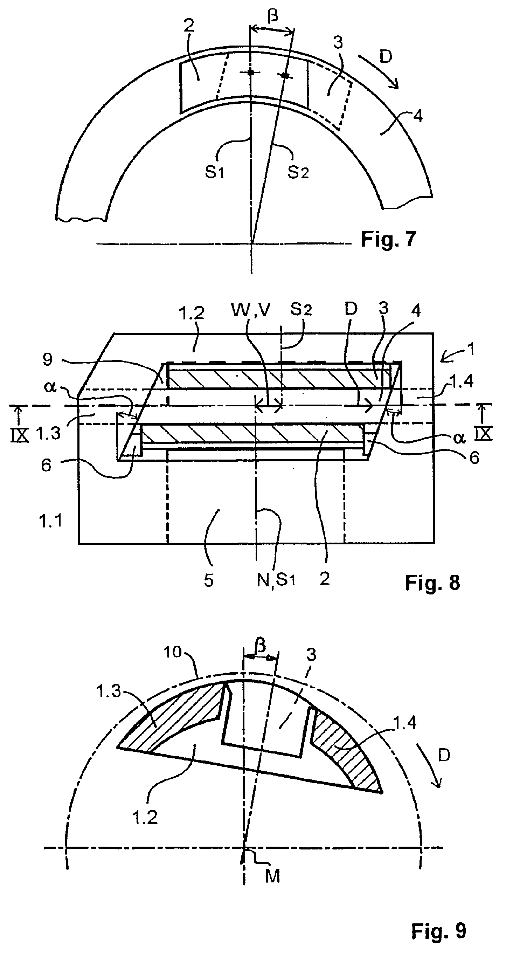

Wie den Figuren 5 bis 7 zu entnehmen ist, fallen die Schwerpunkte S1 und S2 nicht aufeinander. Vielmehr ist der Schwerpunkt S2 der Bremsbacke 3 gegenüber dem Schwerpunkt S1 der Bremsbacke 2 um die Strecke V in Richtung Bremsscheibenauslaufseite versetzt. Dieser Versatz V wird dadurch erreicht, daß die Bremsbacke 3 entweder in Parallelrichtung verschoben oder um einen Winkel β (Figur 7) verdreht gegenüber der Bremsbacke 2 im freien Sattelschenkel angeordnet ist. Die beiden Schwerpunkte S1 und S2 liegen im letzteren Fall auf einem gedachten Kreisbogen um die Mittelachse der Bremsscheibe 4. Diese Ausgestaltung hat den Vorteil, daß gleiche Belagausführungen auf beiden Seiten der Bremsscheibe verwendet werden können. Dadurch werden beispielsweise falsche Einbauten verhindert.

Der Bremssattel 1 weist in dem den Bremsscheibenbereich übergreifenden Brückenbereich eine Radialöffnung 9 auf. Die Kontur der Radialöffnung 9 verläuft in der Draufsicht auf den Bremssattel (Figur 6) unter einem Winkel α schräg in Richtung Belagversatz V und hat somit annähernd die Form eines Parallelogramms.

Der für die Bremse zur Verfügung stehende Bauraum (üblicherweise innerhalb der Radfelge) ist begrenzt.

Ausweislich des Oberbegriffs geht die Erfindung von einer Scheibenbremse aus, wie sie bekannt ist aus der US-A-4,632,227, die der EP 145 593 B1 entspricht. Bei dieser bekannten Scheibenbremse haben die beiden Streben des Sattels 10 von der Bremsscheibe 18 beide den gleichen Radialabstand. Mithin sind keine Unsymmetrien vorgesehen. Daher muß zur Realisierung des Versatzes der beiden Bremsbeläge gegenüber der Zuspannung eine Sattelverbreiterung vorgesehen sein. Sonst können die beiden versetzten Beläge nicht aufgenommen werden. Dementsprechend vergrößert sich der Abstand zwischen den zugehörigen Haltebereichen, wodurch der Bremssattel flächenmäßig einen vergrößerten Teilkreis der Bremsscheibe überdeckt. Der Bremssattel erstreckt sich in der Draufsicht weit über die Breite der Haltevorrichtungen hinaus (hier zum Beispiel rechter Führungsbolzen auf der Scheibenauslaufseite).

Daher baut der Bremssattel der bekannten Scheibenbremse großflächig, was zu einem entsprechend erhöhten Gewicht und zu einer zusätzlichen Belastung der Halte- bzw. Führungsteile führt. Darüber hinaus wird auch das Ziel einer Drehmomentneutralisierung nicht in befriedigendem Maße erreicht. Darüber hinaus vergrößert sich auch der erforderliche Einbauraum.

Es ist Aufgabe der Erfindung, die Scheibenbremse nach der US-A-4,632,227 (EP 145 593 B1) insofern weiterzubilden und zu verbessern, daß insbesondere die zweite (felgenseitige) Bremsbacke gleichmäßig gegen die Bremsscheibe gedrückt wird.

Erfindungsgemäß wird die gestellte Aufgabe durch die im Kennzeichen des neuen Anspruchs 1 angegebenen Merkmale gelöst, insbesondere durch die unterschiedlichen Radialabstände.

Die Erfindung erlaubt es also nicht nur, den zweiten Sattelschenkel hinsichtlich des dafür erforderlichen Bauraums zu minimieren. Vielmehr kann darüber hinaus der Sattel hohe Zuspannkräfte ohne Aufweitung verlustfrei übertragen und sich im vorgegebenen Elastizitätsbereich beim Bremsen in Richtung der bevorzugten Scheibendrehrichtung mitbewegen, ohne daß die Gefahr einer Kollision mit der Bremsscheibe bzw. einer die Bremse umgebenden Radfelge bestünde.

Der Bremssattel vollzieht infolge der beschriebenen Asymmetrie auf der zweiten Seite (Felgenbereich) eine Bewegung nach radial einwärts und drückt somit gleichmäßig die zweite Bremsbacke gegen die Bremsscheibe. Dies bewirkt einen gleichmäßigen Wärmeeintrag in die Bremsscheibe, wodurch sich die Lebensdauer der Bremsscheibe erhöht, weil nachteilige Einflüsse entfallen, die sonst zu einer Überhitzung der Bremsscheibe und zur Ausbildung von Hitzerissen führen würden.

Schließlich führt die erfindungsgemäße Ausgestaltung zu einer Kompensation von Momenten, weshalb der Bremssattel insgesamt weniger Momenten ausgesetzt ist. Er kann daher schwächer ausgelegt werden, was mit einer Bauraum- und Gewichtsersparnis einhergeht.

Bevorzugt wird der Versatz der beiden Sattelschenkel gegeneinander dem Versatz der beiden Schwerpunkte der Bremsbacken bzw. dem Versatz der Bremsbacken entsprechen. Dadurch ergeben sich optimale Betriebsverhältnisse.

Als mechanisch besonders vorteilhaft ist es erfindungsgemäß weiter bevorzugt, daß die beiden Schwerpunkte den gleichen Radialabstand von der Mittelachse der Bremsscheibe haben. Mit anderen Worten ist zwischen den beiden Schwerpunkten ein Winkelabstand um den Bremsscheibenmittelpunkt definiert.

Ein Versatz des zweiten Schwerpunktes gegenüber dem ersten Schwerpunkt in Richtung parallel zur Bremsscheibe kann zumindest teilweise auf einen Versatz der zweiten Bremsbacke gegenüber der ersten Bremsbacke parallel zur Bremsscheibe zurückgehen. Mit anderen Worten ist nach dieser Ausgestaltung der Erfindung vorgesehen, daß die Bremsbacken selbst versetzt zueinander angeordnet sind, und nicht nur ihre Schwerpunkte.

Um auf der Zuspannseite eine symmetrische Zuspannung zu gewährleisten, ist es erfindungsgemäß bevorzugt vorgesehen, daß die Mittelachse der Zuspanneinrichtung durch den ersten Schwerpunkt läuft.

Um eine vollständige Anlage der zweiten Bremsbacke an der Bremsscheibe trotz Versatzes zu gewährleisten, aber auch aus Symmetriegründen, wird die zweite Bremsbacke gegenüber der ersten Bremsbacke verdreht sein. Erfindungsgemäß bevorzugt ist daher auch derjenige Bereich des zweiten Sattelschenkels, der an der zweiten Bremsbacke anliegt, gegenüber demjenigen Bereich des ersten Sattelschenkels, der an der ersten Bremsbacke anliegt, verdreht.

Weiter bevorzugt ist dabei erfindungsgemäß vorgesehen, daß derjenige Bereich des zweiten Sattelschenkels, der an der zweiten Bremsbacke anliegt, gegenüber demjenigen Bereich des ersten Sattelschenkels, der an der ersten Bremsbacke anliegt, um die Drehachse der Bremsscheibe verschwenkt ist. Dies entspricht der Ausführungsform, bei der trotz Versatzes die beiden Schwerpunkte den gleichen Radialabstand von der Mittelachse der Bremsscheibe haben.

Insbesondere zur Materialersparnis kann erfindungsgemäß vorgesehen sein, daß die Verbindungseinrichtung in dem die Bremsscheibe übergreifenden Bereich eine Öffnung aufweist.

Um eine bessere Plazierung der Bremsbacken zu ermöglichen, kann sich die Öffnung erfindungsgemäß bevorzugt in der Projektion parallel zur Bremsscheibe über die erste und/oder die zweite Bremsbacke erstrecken.

Dabei hat die Öffnung weiter bevorzugt näherungsweise die Kontur eines Parallelogramms, wodurch insbesondere bei zueinander versetzt angeordneten Bremsbacken die dem Versatz anzupassende Öffnungsbreite und damit die Gesamtbreite des Bremssattels minimiert ist. Gleichzeitig ergeben sich beidseits der Öffnung Strebenbereiche an dem Sattel, die im wesentlichen dreieckig sind, wodurch die Sattelsteifigkeit erhöht wird. Mit dem Wort "näherungsweise" soll ausgedrückt werden, daß einander gegenüberliegende Seiten des "Parallelogramms" nicht unbedingt exakt parallel zueinander sein müssen, sondern daß die Öffnung auch die Kontur eines windschiefen Parallelogramms haben kann, bei dem beispielsweise nur die parallel zur Bremsscheibe liegenden Begrenzungen parallel zueinander sind.

Alternativ dazu kann auch vorgesehen sein, daß die Öffnung in der Projektion parallel zur Bremsscheibe auf der Bremsscheibeneinlaufseite eine konkave Kontur hat und auf der Bremsscheibenauslaufseite eine annähernd gradlinige Kontur hat, die mit der Bremsscheibenebene einen spitzen oder stumpfen Winkel bildet. Dadurch können spannungstechnisch optimierte Festigkeitseigenschaften des Bremssattels erzielt werden.

Nach einer weiteren Alternative kann vorgesehen sein, dass die Öffnung in der Projektion parallel zur Bremsscheibe sowohl auf der Bremsscheibeneinlaufseite als auch auf der Bremsscheibenauslaufseite eine konkave Kontur hat. Die Kontur kann dabei - ähnlich einem Parallelogramm - unter einem Winkel α angestellt sein.

Nach einer besonders bevorzugten Ausführungsform der Erfindung hat derjenige Teil der Verbindungseinrichtung, der bezüglich der Öffnung auf der Bremsscheibenauslaufseite liegt, in einer parallel zur Bremsscheibe liegenden Ebene einen kleineren Querschnitt als derjenige Teil der Verbindungseinrichtung, der auf der Bremsscheibeneinlaufseite liegt.

Die Außenkonturen des Sattels auf der Bremsscheibeneinlaufseite und der Bremsscheibenauslaufseite sind bevorzugt zueinander annähernd parallel und weiter bevorzugt senkrecht zur Bremsscheibenebene ausgerichtet. Dadurch wird die Sattelbreite minimiert, wodurch Bauraum gespart werden kann.

Diese Ausgestaltung resultiert in einer weiteren Materialeinsparung, wobei gleichzeitig sichergestellt ist, daß sich der Sattel beim Bremsen in Richtung der bevorzugten Scheibendrehrichtung mitbewegen kann. Dadurch ergeben sich die bereits oben beschriebenen Vorteile.

Die Bremse ist erfindungsgemäß bevorzugt mit einem plattenförmigen Tragteil versehen, wodurch der Materialaufwand auch in dieser Hinsicht minimiert ist. Dieses plattenförmige Tragteil kann deshalb verwendet werden, weil erfindungsgemäß Drehmomente neutralisiert sind.

Weiter bevorzugt ist erfindungsgemäß das Tragteil einstückig mit einem Achsteil ausgeführt.

Wie bereits oben ausgeführt, handelt es sich bei der erfindungsgemäßen Scheibenbremse bevorzugt um eine Gleitsattelscheibenbremse, eine Pendelsattelscheibenbremse oder eine Festsattelscheibenbremse mit einseitiger oder beidseitiger Zuspannung.

Die erfindungsgemäße Bremse ist bevorzugt pneumatisch und/oder elektromotorisch betätigbar.

Schließlich ist die Bremse erfindungsgemäß bevorzugt für den Einbau in Nutzfahrzeugen ausgelegt.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 8: eine der Ansicht nach Figur 6 entsprechende Ansicht eines bevorzugten Ausführungsbeispiels der Erfindung,
- Figur 9: eine Schnittansicht entlang der Linie IX/IX in Figur 8,

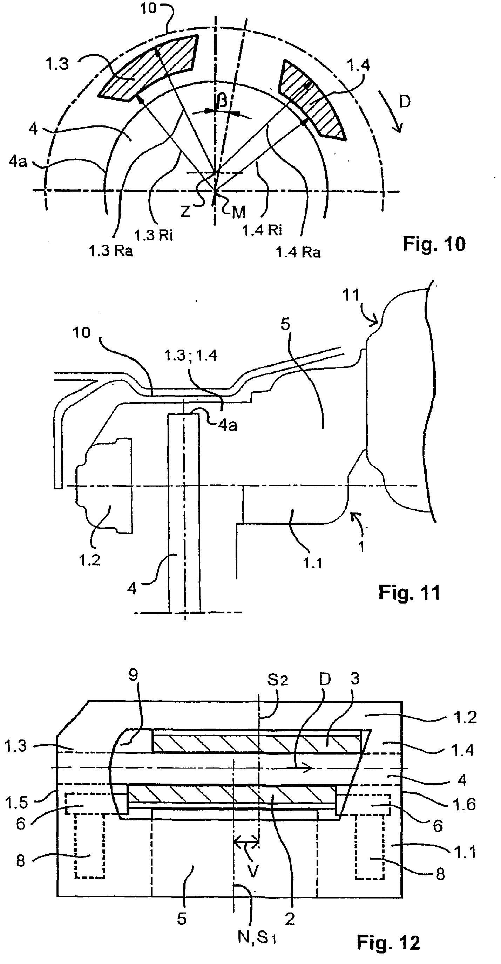

- Figur 10: die gleiche Ansicht wie Figur 9, jedoch ohne die Bremsbacke 3,
- Figur 11: schematisch die Einbaulage der Scheibenbremse nach den Figuren 8 bis 10 innerhalb der Radfelge,
- Figur 12: die gleiche Ansicht wie Figur 8, jedoch von einer alternativen Ausführungsform, und

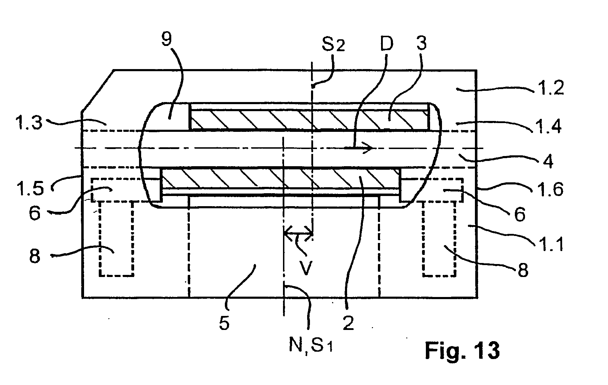

- Figur 13: die gleiche Ansicht wie Figur 8, jedoch von einer weiteren alternativen Ausführungsform.

In Figur 8 ist der Sattelschenkel 1.1 auf der Befestigungsseite gezeigt, der hier auch die Zuspannungseinrichtung 5 trägt. Ferner ist der felgenseitige Sattelschenkel 1.2 gezeigt. Beide Schenkel sind durch Brückenbereiche/-streben 1.3, 1.4 miteinander verbunden, wobei in Drehrichtung D der Bremsscheibe 4 die Brückenstrebe 1.3 einlaufseitig und die Brükkenstrebe 1.4 auslaufseitig liegt. Wie insbesondere Figur 9 zu entnehmen ist, ist die Brükkenstrebe 1.4 schwächer ausgestaltet als die Brückenstrebe 1.3, wodurch die Drehelastizität des Bremssattels verbessert ist.

Die Mittelachse N der Zuspanneinrichtung 5 fällt mit dem Schwerpunkt bzw. der Schwerelinie S1 der zuspannseitigen Bremsbacke 2 zusammen.

Der felgenseitige Sattelschenkel 1.2 ist gegenüber dem zuspannseitigen Sattelschenkel 1.1 um eine Strecke W versetzt. Die Strecke W entspricht der Strecke V des Versatzes der beiden Bremsbacken 2 und 3 gegeneinander.

Im Gegensatz zu der Bremsenausführung nach Figur 6 kann wegen des Versatzes W des felgenseitigen Sattelschenkels 1.2 Sattelmaterial eingespart werden. Dies ist schematisch in Figur 8 dadurch angedeutet, daß oben links eine Abschrägung zu erkennen ist, die so in Figur 6 nicht zu finden ist. Diese Materialeinsparung macht zum einen die Bremse leichter. Zum anderen benötigt die Bremse durch die genannte Abschrägung weniger Bauraum.

Figur 9 zeigt den gegenüber der Befestigungsseite unter einem Winkel β verdrehten felgenseitigen Sattelschenkel 1.2 zur Halterung der felgenseitigen Bremsbacke 3 mit den angeschnittenen verwundenen bzw. verdrillten Streben 1.3, 1.4 sowie deren Positionen in Bezug auf eine Radfelge 10.

Zur Halterung des versetzten und/oder verdrehten felgenseitigen Bremsbelages 3 im felgenseitigen Sattelschenkel 1.2 dienen (nicht gezeigte) Stützleisten, die radial innen und zu beiden Belagenden seitlich ausgebildet sind. Dadurch wird ein Einlegeschacht erzeugt, auf bzw. an dem sich der Belag abstützt bzw. seitlich anlegt. Dadurch kann der Belag über die Radialöffnung sofort in eine definierte Einbaulage gebracht werden. Die als verwunden bzw. verdrillt anzusehenden Strebenausführungen 1.3, 1.4 zur Verbindung der beiden Sattelschenkel 1.1 und 1.2, die dann zu einer veränderten Position des Sattelschenkels 1.2 gegenüber dem Sattelschenkel 1.1 führen, werden durch konstruktive (unterschiedliche) Maßvorgaben an die Bremssattelkonstruktion mit unterschiedlichen Radien und deren Kombination nach Figur 10 entsprechend dem Anwendungsfall der Bremse erzeugt.

Figur 10 zeigt die Lagen der Streben 1.3 und 1.4 nicht nur in Bezug auf die Radfelge 10, sondern auch in Bezug auf die Bremsscheibe 4. Wie Figur 10 insbesondere zu entnehmen ist, sind die Radien 1.3 Ri, 1.3 Ra, 1.4 Ri und 1.4 Ra nicht nur betragsmäßig unterschiedlich, sondern beziehen sich auch auf unterschiedliche gedachte Mittelpunkte. So liegt beispielsweise der gedachte Mittelpunkt Z der Radien 1.3 Ra und 1.4 Ra versetzt gegenüber der Mittelachse M der Bremsscheibe 4. Wie Figur 10 zu entnehmen ist, verlaufen die Streben 1.3 und 1.4 zwischen den Satteischenkeln 1.1 und 1.2 axial über den Außenumfang 4a der Bremsscheibe und verbinden die beiden Sattelschenkel miteinander. Die Lage der Streben gegenüber den genannten Radien sind Radialabstände.

Die Streben weisen unterschiedliche Strebendicken und/oder -querschnitte auf, weshalb sie auch unterschiedliche Radialabstände gegenüber der Radfelge und der Bremsscheibe haben, die durch Kombination unterschiedlicher Außen- und/oder Innenradien erzeugt werden. Zusätzlich oder alternativ können auch unterschiedliche Strebenbreiten durch die besondere Formgebung der Radialöffnung 9 des Bremssattels erzeugt werden, die dann, nicht nur im Zusammenhang mit den unterschiedlichen Strebenquerschnitten, die Festigkeit des Bremssattels selbst und auch die Wirksamkeit bzw. die Übertragung des anzustrebenden Gegenmomentes bzw. eines Momentengleichgewichts beeinflussen.

Figur 11 zeigt unter Bezug auf die oben erläuterten Figuren den sehr begrenzten Einbauraum für Bremsen von Nutzfahrzeugen. Die Bezugszahl 11 bezeichnet einen Betätigungszylinder. Bei den in der Zeichnung dargestellten Scheibenbremsen handelt es sich um pneumatisch und/oder elektromotorisch betätigbare Scheibenbremsen für Nutzfahrzeuge.

Für die Versätze V und W können keine feststehenden Größen angegeben werden. Vielmehr wird der Versatz V zur bewußten Erzeugung des erforderlichen Gegenmoments anhand der jeweiligen Gegebenheiten rechnerisch ermittelt und ist abhängig von dem Reibbeiwert (Reibwertpaarung/Kombination zwischen dem Bremsbelag und der Bremsscheibe) und der Bremsengeometrie (Größe der Bremse/Bremsscheibe). Diese sind letztendlich abhängig von Einzelfall der Scheibenbremse. Analoges gilt im Hinblick auf den Versatz W.

Gleiches gilt darüber hinaus auch für den Verdrehwinkel β. Auch dieser Winkel wird rechnerisch ermittelt und ist abhängig vom Durchmesser der Bremsscheibe und von der Bremsengeometrie. Auch hier ist der entsprechende Einsatzfall der Scheibenbremse zu berücksichtigen.

Figur 12 zeigt die gleiche Ansicht wie Figur 8, jedoch von einer alternativen Ausführungsform. Sie unterscheidet sich von der Ausführungsform nach Figur 8 insbesondere durch die Ausführung der Radialöffnung 9, durch die sich verbesserte Festigkeitseigenschaften im Zusammenhang mit den bereits erläuterten Strebenkonstruktionen hinsichtlich der Sattelverdrehung einstellen. In der Projektion bzw. Draufsicht auf den Bremssattel 1 ist die Radialöffnung 9 derart gestaltet, daß die scheibeneinlaufseitige Brückenstrebe 1.3 konkav zwischen den Sattelschenkeln 1.1 und 1.2 verläuft und die scheibenauslaufseitige Brückenstrebe 1.4 wie in den Figuren 6 und 8 unter einem Winkel α bezüglich der Bremsscheibenebene angestellt verläuft. Neben den unterschiedlichen Radialabständen und/oder Strebenquerschnitten werden damit auch unterschiedliche Brückenbreiten erzeugt, so daß durch die besondere Formgebung spannungstechnisch optimierte Festigkeitseigenschaften des Bremssattels erzielt werden.

Figur 13 zeigt eine weitere alternative Ausführungsform in der Ansicht wie Figur 8. Dabei entspricht die Ausführungsform der Figur 13 im wesentlichen derjenigen von Figur 12, jedoch verläuft die Kontur 9 der scheibenauslaufseitigen Brückenstrebe 1.4 konkav zwischen den Sattelschenkeln 1.1 und 1.2. Zusätzlich dazu kann die konkave Kontur auch noch unter einem Winkel α - wie in den Figuren vorher gezeigt/beschrieben - angestellt sein. Somit werden in den Bereichen der Brückenstreben je nach Lage der Schnittebene besondere Querschnittkonturen erzeugt, die bei Material-/Gewichtseinsparung über ihre Formgebung und/oder in Verbindung mit den Radienkombinationen nach Figur 10 sowie den nochmals harmonisierten Übergangsbereichen innerhalb der Radialöffnung 9 spannungstechnisch noch einmal verbesserte Festigkeitseigenschaften des Bremssattels ergeben.

Wie auch hier deutlich zu erkennen, verlaufen trotz der verdrehten Sattelkonstruktion die beiden äußeren Sattelkonturen 1.5, 1.6, die die Sattelbreite definieren, annähernd parallel zueinander, und zwar bereits von der Seite der Zuspannung über den Außenumfang der Bremsscheibe bis auf den gegenüberliegenden Sattelschenkel. Mit anderen Worten ist trotz der Schenkelverdrehung der Sattel selbst in seiner Breite nicht in Richtung der Drehrichtung D der Bremsscheibe schräg verlaufend. Er baut somit gegenüber dem Stand der Technik schmal und überdeckt damit einen wesentlich kleineren Teilkreisbereich der Bremsscheibe.

Die oben erwähnte Seitenparallelität findet sich selbstverständlich auch bei den anderen gezeigten Sattelausführungen.

## Patentansprüche

1. Scheibenbremse mit
einer Bremsscheibe (4) mit einer bevorzugten Laufrichtung (D),
einer ersten Bremsbacke (2) mit einem ersten Schwerpunkt (S1) auf einer ersten Seite der Bremsscheibe (4),
einer zweiten Bremsbacke (3) mit einem zweiten Schwerpunkt (S2) auf einer zweiten Seite der Bremsscheibe (4),
einem Sattel (1) zum Übertragen von mit der zweiten Bremsbacke (3) erzeugten Bremskräften auf die erste Seite der Bremsscheibe (4), mit einem ersten Sattelschenkel (1.1) auf der ersten Seite der Bremsscheibe (4), einem zweiten Sattelschenkel (1.2) auf der zweiten Seite der Bremsscheibe (4) und einer Verbindungseinrichtung (1.3, 1.4) zum Verbinden des ersten Sattelschenkels (1.1) mit dem zweiten Sattelschenkel (1.2) sowie mit
einer eine senkrecht auf der Bremsscheibe (4) stehende Mittelachse (N) aufweisenden Zuspanneinrichtung (5), die dazu ausgelegt ist, die erste Bremsbacke (2) gegen die Bremsscheibe (4) zu drängen, wobei
der zweite Schwerpunkt (S2) sowohl im Ruhezustand als auch im Betätigungszustand der Bremse gegenüber dem ersten Schwerpunkt (S1) um eine erste vorbestimmte Strecke (V) in Richtung auf eine der bevorzugten Drehrichtung (D) der Bremsscheibe (4) entsprechende Bremsscheibenauslaufseite versetzt ist, und
der zweite Sattelschenkel (1.2) gegenüber dem ersten Sattelschenkel (1.1) um eine zweite vorbestimmte Strecke (W) in Richtung auf die Bremsscheibenauslaufseite versetzt ist,
**dadurch gekennzeichnet, daß**
die Verbindungseinrichtung (1.3, 1.4) zumindest in demjenigen Bereich, in dem sie die Bremsscheibe (4) übergreift, auf der Bremsscheibenauslaufseite radial näher an der Bremsscheibe (4) ist als auf einer Bremsscheibeneinlaufseite.

2. Scheibenbremse nach Anspruch 1, **dadurch gekennzeichnet, daß** die beiden Schwerpunkte (S1, S2) den gleichen Radialabstand von der Mittelachse (M) der Bremsscheibe (4) haben.

3. Scheibenbremse nach Anspruch 1 oder 2, **dadurch gekennzeichnet, daß** ein Versatz (V) des zweiten Schwerpunkts (S2) gegenüber dem ersten Schwerpunkt (S1) in Richtung parallel zur Bremsscheibe (4) zumindest teilweise auf einen Versatz der zweiten Bremsbacke (3) gegenüber der ersten Bremsbacke (2) parallel zur Bremsscheibe (4) zurückgeht.

4. Scheibenbremse nach einem der vorangehenden Ansprüche, **dadurch gekennzeichnet, daß** die Mittelachse (N) der Zuspanneinrichtung (5) durch den ersten Schwerpunkt (S1) läuft.

5. Scheibenbremse nach einem der vorangehenden Ansprüche, **dadurch gekennzeichnet, daß** derjenige Bereich des zweiten Sattelschenkels (1.2), der an der zweiten Bremsbacke (3) anliegt, gegenüber demjenigen Bereich des ersten Sattelschenkels (1.1), der an der ersten Bremsbacke (2) anliegt, verdreht ist.

6. Scheibenbremse nach einem der vorangehenden Ansprüche, **dadurch gekennzeichnet, daß** derjenige Bereich des zweiten Sattelschenkels (1.2), der an der zweiten Bremsbacke (3) anliegt, gegenüber demjenigen Bereich des ersten Sattelschenkels (1.1), der an der ersten Bremsbacke (2) anliegt, um die Drehachse (M) der Bremsscheibe (4) verschwenkt ist.

7. Scheibenbremse nach einem der vorangehenden Ansprüche, **dadurch gekennzeichnet, daß** die Verbindungseinrichtung (1.3, 1.4) in dem die Bremsscheibe (4) übergreifenden Bereich eine Öffnung (9) aufweist.

8. Scheibenbremse nach Anspruch 7, **dadurch gekennzeichnet, daß** die Öffnung (9) sich in der Projektion parallel zur Bremsscheibe (4) über die erste und/oder die zweite Bremsbacke (2, 3) erstreckt.

9. Scheibenbremse nach Anspruch 7 oder 8, **dadurch gekennzeichnet, daß** die Öffnung (9) näherungsweise die Kontur eines Parallelogramms hat.

10. Scheibenbremse nach Anspruch 7 oder 8, **dadurch gekennzeichnet, daß** die Öffnung (9) in der Projektion parallel zur Bremsscheibe (4) auf der Bremsscheibeneinlaufseite eine konkave Kontur hat und auf der Bremsscheibenauslaufseite eine annähernd gradlinige Kontur hat, die mit der Bremsscheibenebene einen spitzen oder stumpfen Winkel (α) bildet.

11. Scheibenbremse nach einem der Ansprüche 7 bis 9, **dadurch gekennzeichnet, daß** die Öffnung (9) in der Projektion parallel zur Bremsscheibe (4) sowohl auf der Bremsscheibeneinlaufseite als auch auf der Bremsscheibenauslaufseite eine konkave Kontur hat.

12. Scheibenbremse nach einem der Ansprüche 7 bis 11, **dadurch gekennzeichnet, daß** derjenige Teil (1.4) der Verbindungseinrichtung (1.3, 1.4), der bezüglich der Öffnung (9) auf der Bremsscheibenauslaufseite liegt, in einer parallel zur Bremsscheibe (4) liegenden Ebene einen kleineren Querschnitt hat als derjenige Teil (1.3) der Verbindungseinrichtung (1.3, 1.4), der auf der Bremsscheibeneinlaufseite liegt.

13. Scheibenbremse nach einem der vorangehenden Ansprüche, **dadurch gekennzeichnet, daß** die Außenkonturen (1.5, 1.6) des Sattels (1) auf der Bremsscheibeneinlaufseite und der Bremsscheibenauslaufseite zueinander annähernd parallel und vorzugsweise senkrecht zur Bremsscheibenebene sind.

14. Scheibenbremse nach einem der vorangehenden Ansprüche, **gekennzeichnet durch** ein plattenförmiges Tragteil (6) zur Verbindung des Bremsstattels ⁽¹⁾ mit einem Fahrzeugteil.

15. Scheibenbremse nach einem der vorangehenden Ansprüche, **dadurch gekennzeichnet, daß** sie pneumatisch und/oder elektromotorisch betätigbar ist.

16. Scheibenbremse nach einem der vorangehenden Ansprüche, **dadurch gekennzeichnet, daß** sie eine Nutzfahrzeugbremse ist.

## Claims

1. Disc brake, comprising
a brake disc (4) with a preferred direction of rotation (D),
a first brake shoe (2) with a first centre of gravity (S1) on a first side of the brake disc (4),
a second brake shoe (3) with a second centre of gravity (S2) on a second side of the brake disc (4),
a calliper (1) for transmitting brake forces generated by the second brake shoe (3) to the first side of the brake disc (4), with a first calliper leg (1.1) on the first side of the brake disc (4), a second calliper leg (1.2) on the second side of the brake disc (4) and a connecting device (1.3, 1.4) for connecting the first calliper leg (1.1) to the second calliper leg (1.2), and
an application device (5) having a centre axis (N) perpendicular to the brake disc (4) and designed to force the first brake shoe (2) against the brake disc (4), wherein
the second centre of gravity (S2) is offset relative to the first centre of gravity (S1) by a first predetermined distance (V) in the direction of a brake disc run-out side corresponding to the preferred direction of rotation (D) of the brake disc (4) both in the actuated state and in the non-actuated state of the brake and
the second calliper leg (1.2) is offset relative to the first calliper leg (1.1) by a second predetermined distance (W) in the direction of the brake disc run-out side,
**characterised in that**
the connecting device (1.3,1.4) is radially closer to the brake disc (4) on the brake disc run-out side than on a brake disc run-in side, at least **in that** region in which it embraces the brake disc (4).

2. Disc brake according to claim 1, **characterised in that** the two centres of gravity (S1, S2) are at the same radial distance from the centre axis (M) of the brake disc (4).

3. Disc brake according to claim 1 or claim 2, **characterised in that** an offset (V) of the second centre of gravity (S2) relative to the first centre of gravity (S1) in the direction parallel to the brake disc (4) is at least partially due to an offset of the second brake shoe (3) relative to the first brake shoe (2) parallel to the brake disc (4).

4. Disc brake according to one of the preceding claims, **characterised in that** the centre axis (N) of the application device (5) runs through the first centre of gravity (S1).

5. Disc brake according to one of the preceding claims, **characterised in that** that region of the second calliper leg (1.2) which bears against the second brake shoe (3) is rotated relative to that region of the first calliper leg (1.1) which bears against the first brake shoe (2).

6. Disc brake according to one of the preceding claims, **characterised in that** that region of the second calliper leg (1.2) which bears against the second brake shoe (3) is swivelled about the axis of rotation (M) of the brake disc (4) relative to that region of the first calliper leg (1.1) which bears against the first brake shoe (2).

7. Disc brake according to one of the preceding claims, **characterised in that** the connecting device (1.3, 1.4) has an opening (9) in the region embracing the brake disc (4).

8. Disc brake according to claim 7, **characterised in that** the opening (9) extends over the first and/or the second brake shoe (2, 3) in the projection parallel to the brake disc (4).

9. Disc brake according to claim 7 or claim 8, **characterised in that** the opening (9) has approximately the contour of a parallelogram.

10. Disc brake according to claim 7 or claim 8, **characterised in that**, in the projection parallel to the brake disc (4), the opening (9) has a concave contour on the brake disc run-in side and an approximately rectilinear contour forming an acute or obtuse angle (α) with the brake disc plane on the brake disc run-out side.

11. Disc brake according to one of claims 7 to 9, **characterised in that**, in the projection parallel to the brake disc (4), the opening (9) has a concave contour both on the brake disc run-in side and on the brake disc run-out side.

12. Disc brake according to one of claims 7 to 11, **characterised in that** that part (1.4) of the connecting device (1.3, 1.4) situated on the brake disc run-out side with respect to the opening (9) has a smaller cross section in a plane situated parallel to the brake disc (4) than that part (1.3) of the connecting device (1.3, 1.4) situated on the brake disc run-in side.

13. Disc brake according to one of the preceding claims, **characterised in that** the outer contours (1.5, 1.6) of the calliper (1) on the brake disc run-in side and on the brake disc run-out side are approximately parallel to one another and preferably perpendicular to the brake disc plane.

14. Disc brake according to one of the preceding claims, **characterised by** a plate-shaped supporting part (6) for connecting the brake calliper (1) to a vehicle part.

15. Disc brake according to one of the preceding claims, **characterised in that** it can be actuated pneumatically and/or by means of an electric motor.

16. Disc brake according to one of the preceding claims, **characterised in that** it is a commercial vehicle brake.

## Revendications

1. Frein à disque avec
un disque de frein (4) d'une direction de déplacement préférée (D),
un premier segment de frein (2) avec un premier centre de gravité (S1) sur un premier côté du disque de frein (4),
un deuxième segment de frein (3) avec un deuxième centre de gravité (S2) sur un deuxième côté du disque de frein (4),
un étrier (1) pour transférer les forces de freinage produites avec le deuxième segment de frein (3) au premier côté du disque de frein (4), avec une première branche d'étrier (1.1) sur le premier côté du disque de frein (4), une seconde branche d'étrier (1.2) sur le second côté du disque de frein (4) et une installation de liaison (1.3, 1.4) pour relier la première branche d'étrier (1.1) à la deuxième branche d'étrier (1.2), et avec
une installation d'application (5) présentant un axe médian (N) s'étendant perpendiculairement au disque de frein (4), qui est conçu pour pousser le premier segment de frein (2) contre le disque de frein (4), où
le deuxième centre de gravité (S2) est décalé à la fois à l'état de repos et aussi à l'état d'actionnement du frein par rapport au premier centre de gravité (S1) d'une première distance prédéterminée (V) en direction d'un côté sortie de disque de frein correspondant à la direction de rotation préférée (D) du disque de frein (4) et
la deuxième branche d'étrier (1.2) est décalée par rapport à la première branche d'étrier (1.1) d'une seconde distance prédéterminée (W) en direction du côté sortie du disque de frein,
**caractérisé**
**en ce que** l'installation de liaison (1.3, 1.4), au moins dans la zone dans laquelle elle passe sur le disque de frein (4), au côté sortie du disque de frein est radialement plus proche du disque de frein (4) que sur un côté entrée du disque de frein.

2. Frein à disque selon la revendication 1, **caractérisé en ce que** les deux centres de gravité (S1, S2) ont le même écart radial de l'axe médian (M) du disque de frein (4).

3. Frein à disque selon la revendication 1 ou 2, **caractérisé en ce qu'**un décalage (V) du deuxième centre de gravité (S2) par rapport au premier centre de gravité (S1) dans la direction parallèle au disque de frein (4) provient au moins partiellement d' un décalage du deuxième segment de frein (3) par rapport au premier segment de frein (2) parallèlement au disque de frein (4).

4. Frein à disque selon l'une des revendications précédentes, **caractérisé en ce que** l'axe médian (N) de l'installation d'application (5) passe à travers le premier centre de gravité (S1).

5. Frein à disque selon l'une des revendications précédentes, **caractérisé en ce que** la zone de la seconde branche d'étrier (1.2) qui s'applique au second segment de frein (3) est tournée par rapport à la zone de la première branche d'étrier (1.1) qui s'applique au premier segment de frein (2).

6. Frein à disque selon l'une des revendications précédentes, **caractérisé en ce que** la zone de la seconde branche d'étrier (1.2), qui s'applique au second segment de frein (3), a été amenée à pivoter par rapport à la zone de la première branche d'étrier (1.1), qui s'applique au premier segment de frein (2), autour de l'axe de rotation (M) du disque de frein (4).

7. Frein à disque selon l'une des revendications précédentes, **caractérisé en ce que** l'installation de liaison (1.3, 1.4), dans la zone passant sur le disque de frein (4), présente une ouverture (9).

8. Frein à disque selon la revendication 7, **caractérisé en ce que** l'ouverture (9) s'étend dans la projection parallèlement au disque de frein (4) sur le premier et/ou le deuxième segment de frein (2, 3).

9. Frein à disque selon la revendication 7 ou 8, **caractérisé en ce que** l'ouverture (9) possède approximativement le contour d'un parallélogramme.

10. Frein à disque selon la revendication 7 ou 8, **caractérisé en ce que** l'ouverture (9) possède dans la projection, parallèlement au disque de frein (4), au côté entrée du disque de frein, un contour concave, et au côté sortie du disque de frein, un contour approximativement rectiligne, qui forme avec le plan du disque de frein un angle aigu ou obtus (α).

11. Frein à disque selon l'une des revendications 7 à 9, **caractérisé en ce que** l'ouverture (9) possède dans la projection, parallèlement au disque de frein (4) à la fois au côté entrée du disque de frein et aussi au côté sortie du disque de frein un contour concave.

12. Frein à disque selon l'une des revendications 7 à 11, **caractérisé en ce que** la partie (1.4) de l'installation de liaison (1.3, 1.4), qui se situe par rapport à l'ouverture (9) au côté sortie du disque de frein, possède dans un plan situé parallèlement au disque de frein (4) une plus petite section transversale que la partie (1.3) de l'installation de liaison (1.3, 1.4), qui se situe au côté entrée du disque de frein.

13. Frein à disque selon l'une des revendications précédentes, **caractérisé en ce que** les contours extérieurs (1.5, 1.6) de l'étrier (1), au côté entrée du disque de frein et au côté sortie du disque de frein, sont approximativement parallèles l'un à l'autre et de préférence perpendiculaires au plan du disque de frein.

14. Frein à disque selon l'une des revendications précédentes, **caractérisé par** une pièce de support (6) en forme de plaque pour relier l'étrier de frein (1) à une partie de véhicule.

15. Frein à disque selon l'une des revendications précédentes, **caractérisé en ce qu'**il est actionnable d'une manière pneumatique et/ou électro-motrice.

16. Frein à disque selon l'une des revendications précédentes, **caractérisé en ce qu'**il est un frein d'un véhicule utilitaire.
